# EUROPÄISCHE PATENTSCHRIFT

(11) **EP 2 153 166 B1**
(45) Veröffentlichungstag und Bekanntmachung des Hinweises auf die Patenterteilung: **18.12.2019**
(21) Anmeldenummer: 08736008.7
(22) Anmeldetag: 09.04.2008
(51) Int. Cl.: G01B 11/30, G01B 11/24

(54) **VERFAHREN ZUR FORMMESSUNG VON FREIFORM-FLÄCHEN**
METHOD FOR MEASURING THE SHAPE OF FREEFORM SURFACES
PROCÉDÉ DE MESURE DE FORME DE SURFACES DE FORME LIBRE

(30) Priorität: 24.05.2007 DE 102007024197
(43) Veröffentlichungstag der Anmeldung: 17.02.2010
(60) Teilanmeldung: 19161790.1
(73) Patentinhaber: Taylor Hobson Ltd., Leicester LE4 9JQ (GB)
(72) Erfinder: FLEISCHER, Matthias, 73760 Ostfildern (DE); DRABAREK, Pawel, 75233 Tiefenbronn (DE); KOCHENDOERFER, Ralf, 71229 Leonberg (DE)
(74) Vertreter: Weilnau, Carsten
(86) Internationale Anmeldenummer: PCT/EP2008/054283
(87) Internationale Veröffentlichungsnummer: WO 2008/141869

(56) Entgegenhaltungen:
- EP-A- 0 565 357
- WO-A-02/06765
- WO-A-02/40936
- DE-A1- 3 322 714
- DE-A1- 3 511 611
- DE-A1- 19 808 273

## Beschreibung

### Stand der Technik

Die Erfindung betrifft ein Verfahren zur Formmessung von Freiform-Flächen an Messobjekten mit einem punktmessenden optischen und/oder interferometrischen Tastarm, welcher entlang einer vorgegebenen Bahnlinie bewegbar ist, mit einem auf die zu messende Freiform-Fläche fokussierten Messstrahl.

Aus der Schrift DE 198 08 273 ist eine interferometrische Messeinrichtung zum Erfassen der Form rauer Oberflächen bekannt, wobei eine räumlich kohärente Strahlerzeugungseinheit vorgesehen ist, die eine zeitlich kurzkohärente und breitbandige Strahlung abgibt, und eine Trennung in einen Abschnitt mit den Komponenten eines Modulationsinterferometers und den Komponenten einer Messsonde vorgenommen und die Messsonde über eine Lichtleitfaseranordnung mit dem Modulationsinterferometer gekoppelt ist und von dem Modulationsinterferometer entfernt verwendbar ist.

Solche interferometrische Messeinrichtungen werden in Formmessmaschinen eingesetzt. Die Messsonde ist in einem optischen Tastarm integriert, der beispielsweise über eine Magnetkupplung auswechselbar mit einer Messmaschine mechanisch verbunden ist. Das Modulationsinterferometer als Bestandteil des optischen Messgerätes ist ebenfalls an die Messmaschine angebunden. Die optische Verbindung zwischen dem optischen Messgerät und der Messsonde erfolgt über die Lichtleitfaseranordnung.

Bekannte Formmessmaschinen mit punktmessenden optischen Tastarmen verwenden Anordnungen zur Bewegung des Tastarm-Abtastpunktes entlang einer Bahnlinie. Ein optischer oder interferometrischer Tastarm hat jedoch einen begrenzten Akzeptanzwinkel, was die zulässige Variation der Oberflächenneigung der zu messenden Oberfläche begrenzt. Somit können mit einer solchen Anordnung grundsätzlich nur zylindrische, kegelförmige oder ebene Flächen vermessen werden. Die Vermessung von beispielsweise kugelförmigen, rotationssymmetrischen oder asphärischen Oberflächen ist nicht möglich, da ab einer bestimmten Neigung der Oberfläche zu der optischen Achse des Tastarms der zulässige Akzeptanzwinkel überschritten wird. Die DE 33 22 714 A1 beschreibt ein nach dem Fokussierungs- oder Triangulationsmessverfahren berührungslos optisch arbeitendes Verfahren zur Abstandsmessung. Ferner offenbart die DE 35 11 611 A1 ein Messsystem zum Messen von dreidimensionalen Koordinaten.

Es sind weiterhin flächenhaft messende optische Systeme, beispielsweise in Form eines Weißlicht-Interferometers, bekannt. Solche Systeme benötigen Objektive, welche für die zu messende Oberfläche angepasste Lichtwellen-Fronten erzeugen. Die Objektive für Freiform-Flächen sind sehr aufwändig und entsprechend teuer.

Es ist daher Aufgabe der Erfindung, ein Verfahren zu schaffen, welches die optische Vermessung von beliebigen Freiform-Flächen mit punktförmig messenden Tastarmen ermöglicht.

### Vorteile der Erfindung

Die betreffende Aufgabe der Erfindung wird mit einem Verfahren gemäß dem unabhängigen Patentanspruch 1 dadurch gelöst, dass ein punktmessender optischer interferometrischer Tastarm bezogen auf seinen Abtastpunkt in zumindest einer Ebene derart gedreht wird, dass der Messstrahl senkrecht oder innerhalb eines Akzeptanzwinkels des Tastarms auf die zu messende Freiform-Fläche trifft. Überlagert mit der vorgegebenen Bahnbewegung des Tastarms kann der Abtastpunkt über die Freiform-Fläche bewegt werden, wobei der Winkel zwischen der Flächennormalen der zu messenden Oberfläche im Abtastpunkt und der optischen Achse des Tastarms über die Drehbewegung des Tastarms so eingestellt wird, dass der von dem Tastarm vorgegebene Akzeptanzwinkel, innerhalb dem eine Messung möglich ist, nicht überschritten wird. Dabei werden die besten Messergebnisse erzielt, wenn der Messstrahl senkrecht oder zumindest annähernd senkrecht auf die zu messende Oberfläche auftrifft.

Ist der Tastarm lediglich in einer Ebene um seinen Abtastpunkt drehbar und liegt auch die Bahnbewegung auf dieser Ebene, so ergibt dies einen einfachen Aufbau einer Vorrichtung, die jedoch zunächst nur entlang einer Linie misst. Ist der Tastarm hingegen in zwei senkrecht aufeinander stehenden Ebenen drehbar und ist auch eine entsprechende Bahnbewegung vorgesehen, so können auch zweidimensionale Oberflächen gemessen werden.

Ist es vorgesehen, dass das Messobjekt drehbar ist, so kann mit einem Tastarm, der nur in einer Ebene um seinen Abtastpunkt drehbar ist und dessen Bahnbewegung auf dieser Ebene liegt, eine zweidimensionale Formfläche aufgenommen werden, indem das Messobjekt und somit die Freiform-Fläche entsprechend gedreht wird. Dies ermöglicht beispielsweise die Messung der Oberfläche einer Kugel, indem der Tastarm auf einen Punkt der Kugeloberfläche ausgerichtet wird, die Kugeloberfläche durch die Rotationsbewegung der Kugel durch den Abtastpunkt bewegt wird und so die Kugeloberfläche linienförmig abgetastet wird.

Gemäß einer bevorzugten Ausgestaltungsvariante der Erfindung ist es vorgesehen, dass der Tastarm Teil einer interferometrischen Messeinrichtung ist, wobei der Tastarm über eine Lichtleitfaseranordnung mit einem Modulationsinterferometer verbunden ist. Die interferometrische Messeinrichtung ermöglicht die optische Vermessung der Oberfläche des Prüfobjektes. Dabei erlaubt die Lichtleitfaseranordnung die freie Bewegung des Tastarms entlang der Bahnlinie sowie die Drehung des Tastarms um den Abtastpunkt.

Ferner kann der Tastarm bezogen auf seinen Abtastpunkt senkrecht zu der optischen Achse des Tastarms in zumindest einer Ebene gedreht und die Drehung des Tastarms bezogen auf seinen Abtastpunkt durch eine Rotationsbewegung des Tastarms senkrecht zu der optischen Achse des Tastarms bei gleichzeitiger Bewegung des Tastarms entlang der Bahnlinie erreicht werden. Durch diesen überlagerten Bewegungsablauf kann der Abtastpunkt auf einen vorgesehenen Punkt der Freiform-Fläche unter Einhaltung eines günstigen Abtastwinkels ausgerichtet werden.

### Kurze Beschreibung der Zeichnungen

Die Erfindung wird im Folgenden anhand der in den Figuren dargestellten Ausführungsbeispiele näher, erläutert. Es zeigen:
Figur 1 in einer grafischen Darstellung die Bewegung eines Tastarms zur Messung einer ersten Freiform-Fläche,
Figur 2 in einer grafischen Darstellung die Bewegung eines Tastarms zur Messung einer zweiten Freiform-Fläche.

### Ausführungsformen der Erfindung

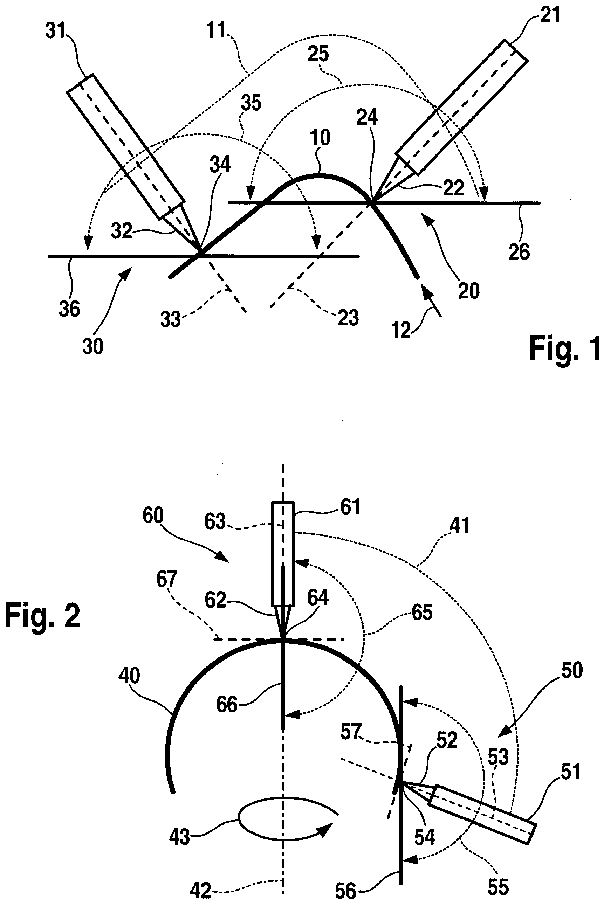

Figur 1 zeigt in einer grafischen Darstellung die Bewegung eines Tastanns 21, 31 zur Messung einer ersten Freiform-Fläche 10.

Der Tastarm 21, 31 ist in einer ersten Messposition 20 und in einer zweiten Messposition 30 dargestellt.

Für die erste Messposition 20 ist dem Tastarm Position 1 21 eine optische Achse Position 1 23 und ein Messstrahl Position 1 22 zugeordnet. Entsprechend ist für die zweite Messposition 30 dem Tastarm Position 2 31 eine optische Achse Position 2 33 und ein Messstrahl Position 2 32 zugeordnet.

Der Messstrahl Position 1 22 und der Messstrahl Position 2 32 sind in einem jeweils zugehörigen Abtastpunkt Position 1 24 und Abtastpunkt Position 2 34 auf die erste Freiform-Fläche 10 fokussiert.

Eine Bahnlinie 11 gibt die an die erste Freiform-Fläche 10 angepasste Bewegung des Tastarms 21, 31 an, entlang welcher der Tastarm 21, 31 von der ersten Messposition 20 zu der zweiten Messposition 30 gelangt.

Ein Drehwinkel 25 symbolisiert die mögliche Drehbewegung des Tastarms Position 1 21 in der ersten Messposition 20, während ein Drehwinkel 35 die mögliche Drehbewegung des Tastarms Position 2 31 in der zweiten Messposition 30 darstellt. Die Drehbewegung ist in dem Ausführungsbeispiel auf 180° begrenzt, was durch die Winkelbegrenzung Position 1 26 und die Winkelbegrenzung Position 2 36 gezeigt ist.

Eine Bewegungsrichtung 12 gibt den Verfahrweg des Abtastpunktes 24, 34 über die erste Freiform-Fläche 10 an.

Zur optischen Vermessung der Oberfläche der ersten Freiform-Fläche 10 wird der Tastarm 21, 31 entlang der ersten Bahnlinie 10 derart bewegt, dass der Abtastpunkt 24, 34 über die erste Freiform-Fläche 10 bewegt wird. Die erste Bahnlinie 10 ist dabei so gewählt, dass der Messstrahl 22, 32 immer auf der ersten Freiform-Fläche 10 fokussiert ist.

Erfindungsgemäß ist es vorgesehen, dass der Tastarm 21, 31 entsprechend dem dargestellten Drehwinkel Position 1 25 und Drehwinkel Position 2 35 um den jeweiligen Abtastpunkt Position 1 23 beziehungsweise Abtastpunkt Position 2 33 gedreht werden kann. Dadurch ist es möglich, dass die optische Achse 23, 33 des Tastarms 21, 31 annähernd senkrecht auf die erste Freiform-Fläche 10 ausgerichtet werden kann. Der Messstrahl 22, 32 trifft somit immer innerhalb eines von dem Tastarm 21, 31 vorgegebenen Akzeptanzwinkel auf die erste Freiform-Fläche 10.

Drehbewegung und Bewegung entlang der ersten Bahnlinie 11 werden dabei so überlagert, dass der Abtastpunkt 24, 34 in einem günstigen Winkel der optischen Achse 23, 33 des Tastarms 21, 31 über die erste Freiform-Fläche 10 entsprechend der gezeigten Bewegungsrichtung 12 geführt wird. Damit wird es möglich, die Formabweichung der ersten Freifonn-Fläche 10 von einer Sollkontur zu ermitteln, wobei sich die Oberflächenneigung der ersten Freiform-Fläche 10 nahezu beliebig ändern kann, ohne dass der Akzeptanzwinkel des Tastarms 21, 31 überschritten wird.

Figur 2 zeigt in einer grafischen Darstellung die Bewegung eines Tastarms 51, 61 zur Messung einer zweiten Freiform-Fläche 40.

Der Tastarm 51, 61 ist in einer dritten Messposition 50 und einer vierten Messposition 60 gezeigt.

Analog der Darstellung in Figur 1 ist hier in der dritten Messposition 50 dem Tastarm Position 3 51 eine optische Achse Position 3 53, ein Messstrahl Position 3 52 und ein Abtastpunkt Position 3 54 zugeordnet. Ein Drehwinkel Position 3 55 gibt die mögliche Drehung des Tastarms Position 3 51 um den Abtastpunkt Position 3 54 an, um einen optimalen Winkel zwischen der optischen Achse Position 3 53 und der zweiten Freiform-Fläche 40 einzustellen. Dabei ist die Ausrichtung der Oberfläche der zweiten Freiform-Fläche 10 durch eine Tangente Position 3 57 gekennzeichnet. Der Drehwinkel Position 3 55 ist entsprechend der Winkelbegrenzung Position 3 56 auf 180° begrenzt.

In der vierten Messposition 60 ist der Tastann Position 4 61 so ausgerichtet, dass seine optische Achse Position 4 63 annähernd senkrecht zur Oberfläche der zweiten Freiform-Fläche 40, dargestellt durch eine entsprechende Tangente Position 4 67, ausgerichtet ist. Ein Drehwinkel Position 4 65 gibt die dazu mögliche Drehbewegung des Tastarms Position 4 61 um seinen Abtastpunkt Position 4 64 wider. In der darstellten Ausführungsvariante ist die Ausrichtung des Tastarms Position 4 61 in seiner maximalen Auslenkung gezeigt, so dass die optische Achse Position 4 33 mit einer gezeigten Winkelbegrenzung Position 4 66 deckungsgleich übereinander liegt.

Der Tastarm 51, 61 kann entlang einer an die zweite Freiform-Fläche 40 angepassten zweiten Bahnlinie 41 derart verfahren werden, dass der Abtastpunkt 54, 64 über die zweite Freiform-Fläche 40 geführt wird. Dabei kann durch eine gleichzeitige Rotationsbewegung des Tastarms 51, 61 um den Abtastpunkt 54, 64 die optische Achse 53, 63 des Tastarms 51, 61 so eingestellt werden, dass der Messstrahl 52, 62 annähernd senkrecht, zumindest innerhalb des von dem Tastarm 51, 61 vorgegebenen Akzeptanzwinkels, auf die zweite Freiform-Fläche 40 trifft.

In dem Ausführungsbeispiel ist die zweite Freiform-Fläche 40 als Kugeloberfläche ausgebildet. Es ist vorgesehen, dass die Kugel um eine Drehachse 42 gemäß einer dargestellten Drehbewegung 43 eine rotationsförmige Bewegung ausüben kann. Diese Anordnung ermöglicht es, mit einer Vorrichtung, welche lediglich die dargestellte Bewegung des Tastarms 51, 61 in einer Bewegungsebene erlaubt, rotationssymmetrische Bauelemente zu messen. Dazu wird beispielsweise in der dritten Messposition 50 des Tastarms Position 3 51 die Kugel um die Drehachse 42 um 360° gedreht und die Oberfläche gemessen. Anschließend wird der Abtastpunkt Position 3 54 durch eine Bewegung des Tastarms Position 3 51 entlang der zweiten Bahnlinie 41 in Richtung der vierte Messposition 60 verschoben, wobei der optimale Winkel zwischen der optischen Achse 53, 63 des Tastarms 51, 61 und der Kugeloberfläche durch eine entsprechende Drehbewegung des Tastarms 51, 61 eingestellt wird. In dieser neuen Position kann die Kugel wieder um 360° gedreht und die Oberfläche entsprechend gemessen werden. Der Vorgang wiederholt sich, bis die vierte Messposition 60 erreicht ist.

Durch Aneinanderfügen der so erhaltenen Messlinien kann ein komplettes Abbild der zweidimensionalen Oberfläche der Kugel erreicht werden, beispielsweise mit der Rauhigkeit der Kugeloberfläche als dritte Dimension.

Entsprechend dem dargestellten Ausführungsbeispiel können beliebige weitere rotationssymmetrische Freiform-Flächen 40, beispielsweise mit asphärischen Geometrien, gemessen werden. Dabei kann beispielsweise die Rauhigkeit der Oberfläche oder die Abweichung von einer vorgegebenen Kontur über die gesamte Freiform-Fläche 40 ermittelt werden.

## Patentansprüche

1. Verfahren zur Formmessung von Freiform-Flächen (10, 40) an Messobjekten mit einem punktmessenden optischen interferometrischen Tastarm (21, 31, 51, 61), welcher entlang einer an die Freiform-Fläche (10, 40) angepassten vorgegebenen Bahnlinie (11, 41) bewegt wird, mit einem während der Bewegung des Tastarms (21, 31, 51, 61) über die vorgegebene Bahnlinie (11, 41) in einem Abtastpunkt (24, 34, 54, 64) auf die zu messende Freiform-Fläche fokussierten Messstrahl (22, 32, 52, 62), wobei die Bahnlinie (11, 41) so gewählt ist, dass der Messstrahl (22, 32, 52, 62) immer auf die Freiform-Fläche (10, 40) fokussiert ist, wobei der Tastarm (21, 31, 51, 61) bezogen auf seinen Abtastpunkt (24, 34, 54, 64) in zumindest einer Ebene, in der auch die Bewegung des Tastarms (21, 31, 51, 61) entlang der Bahnlinie (11, 41) liegt, derart um den Abtastpunkt (24, 34, 54, 64) um einen Drehwinkel (25, 35, 55, 65) gedreht wird, dass der Messstrahl (22, 32, 52, 62) senkrecht oder innerhalb eines Akzeptanzwinkels des Tastarms (21, 31, 51, 61) auf die zu messende Freiform-Fläche (10, 40) trifft.

## Claims

1. Method for measuring the shape of freeform surfaces (10, 40) on measurement objects using a point-measuring optical interferometric scanning arm (21, 31, 51, 61), which is moved along a specified trajectory (11, 41) that is adapted to the freeform surface (10, 40), with a measurement beam (22, 32, 52, 62) that is focused onto the freeform surface to be measured in a scanning point (24, 34, 54, 64) during the movement of the scanning arm (21, 31, 51, 61) over the specified trajectory (11, 41), wherein the trajectory (11, 41) is chosen such that the measurement beam (22, 32, 52, 62) is always focused onto the freeform surface (10, 40), wherein the scanning arm (21, 31, 51, 61) is rotated, with reference to its scanning point (24, 34, 54, 64), in at least one plane, in which also the movement of the scanning arm (21, 31, 51, 61) along the trajectory (11, 41) is located, by an angle of rotation (25, 35, 55, 65) about the scanning point (24, 34, 54, 64) in a manner such that the measurement beam (22, 32, 52, 62) is incident on the freeform surface (10, 40) to be measured perpendicularly or within an acceptance angle of the scanning arm (21, 31, 51, 61).

## Revendications

1. Procédé de mesure de forme de surfaces de forme libre (10, 40) sur des objets à mesurer avec un bras de palpage (21, 31, 51, 61) interférométrique optique à mesure ponctuelle, lequel est déplacé le long d'une ligne de trajectoire (11, 41) prédéfinie adaptée à la surface de forme libre (10, 40), avec un rayon de mesure (22, 32, 52, 62) concentré en un point de palpage (24, 34, 54, 64) sur la surface de forme libre à mesurer pendant le déplacement du bras de palpage (21, 31, 51, 61) au-dessus de la ligne de trajectoire (11, 41) prédéfinie, la ligne de trajectoire (11, 41) étant choisie de telle sorte que le rayon de mesure (22, 32, 52, 62) est toujours concentré sur la surface de forme libre (10, 40), le bras de palpage (21, 31, 51, 61) étant tourné par rapport à son point de palpage (24, 34, 54, 64) dans au moins un plan, dans lequel se trouve également le mouvement du bras de palpage (21, 31, 51, 61) le long de la ligne de trajectoire (11, 41), autour du point de palpage (24, 34, 54, 64) selon un angle de rotation (25, 35, 55, 65) de telle sorte que le rayon de mesure (22, 32, 52, 62) vient frapper la surface de forme libre (10, 40) à mesurer perpendiculairement ou à l'intérieur d'un angle d'acceptation du bras de palpage (21, 31, 51, 61).
